# EUROPEAN PATENT SPECIFICATION

(11) **EP 4 370 381 B1**
(45) Date of publication and mention of the grant of the patent: **19.03.2025**
(21) Application number: 22785787.7
(22) Date of filing: 01.09.2022
(51) Int. Cl.: B65D 8/00, H04M 1/04

(54) **PACKAGING SYSTEM FOR AN ELECTRONIC DEVICE BUILT OF USABLE COMPONENTS COMPLEMENTING THE FUNCTIONALITY OF THE DEVICE**
VERPACKUNGSSYSTEM FÜR EIN ELEKTRONISCHES GERÄT, BESTEHEND AUS VERWENDBAREN KOMPONENTEN, DIE DIE FUNKTIONALITÄT DES GERÄTS ERGÄNZEN
SYSTÈME D'EMBALLAGE POUR UN APPAREIL ÉLECTRONIQUE CONSTITUÉ DE COMPOSANTS UTILISABLES COMPLÉTANT LA FONCTIONNALITÉ DE L'APPAREIL

(30) Priority: 03.09.2021 BG 537421
(43) Date of publication of application: 22.05.2024
(73) Proprietor: Ilchev, Petyo, 1505 Sofia (BG)
(72) Inventor: Ilchev, Petyo, 1505 Sofia (BG)
(74) Representative: Benatov, Samuil Gabriel
(86) International application number: PCT/IB2022/058223
(87) International publication number: WO 2023/031851

(56) References cited:
- WO-A1-2013/166326
- WO-A1-2017/201500
- BG-U1- 4 141
- KR-A- 20120 072 296

## Description

### TECHNICAL FIELD

The invention refers to a packaging system for an electronic device built of usable components complementing the functionality of the device.

### PRIOR ART

A system for protecting an electronic device in the form of a packaging package, described in US patent US 2017/0210535 A1, is known, which comprises an outer body made up of two parts with free volume for a device, which form the overall dimensions of the packaging package, containing a packaging body, forming a receptacle for accessories.

A disadvantage of this system is the presence of high amount of waste materials, which create prerequisites for environmental pollution.

Document WO2017/201500A1 discloses a case for storing a mobile computing device and a wireless earbud, which includes a back panel, a front panel with a viewing aperture, a plurality of sidewalls extending around, and a dividing layer between the front panel and the back panel. The front panel and the dividing layer together define a first housing configured to receive and restrain a mobile computing device, and the dividing layer and the back panel together define a second housing for a wireless earbud charging contact disposed within the second housing.

Document WO2013/166326A1 discloses a headset retraction device for a portable media player including a base and an arbor, wherein the arbor is configured to rotate within a cavity defined by the base, and the arbor and base are cooperatively configured to wind a cord of the headset in a single plane.

Document KR20120072296A discloses a cup sleeve, made of two bendable cutting lines, two inside folding lines and a cutting line, wherein the cup sleeve is used as a holder for a digital device like a smart phone through a simple manipulation.

A disadvantage of these documents is that there is high disposal of waste products in the environment.

### SUMMARY OF THE INVENTION

The object of the present invention is to create a packaging system for an electronic device built of usable components complementing the functionality that eliminates the need for standard packaging package.

This object is achieved by creating a compact and functional system of usable components functioning as packaging package, interacting with each other in a way that makes assembly/disassembly of the package possible without harming the functionality of the components, as well as preserving the electronic device in a complete and protected form in the process of its transportation.

A packaging system according to the invention is defined in claim 1.

In order to minimize the total number of parts when assembling the individual functional packaging products, maximally unified components, which are assembled in all packaging products, have been created.

The functional packaging system can be built without unusable materials after unpacking.

According to the invention, the electronic device packaging system built of usable components complementing the functionality of the device comprises geometrically connected first connecting element comprising a sound reproduction means connected to one side of an intermediate connecting element which at its other side is connected to a second connecting element, which is housing a device for charging said electronic device. The intermediate connecting element is a flexible component that can be flat, which in a bent position is arranged around a space for accommodation of the electronic device and is secured to the bottom of the first connecting element and to the ceiling of the second connecting element.

All elements can be connected by various types of known fits, for example, the connection between the first, intermediate and second connecting elements of the system can be made by means of grooves formed for the purpose on the bottom of the first connecting element and on the ceiling of the second connecting element, in which the intermediate connecting element is placed in a bent position. Alternatively, the elements may be temporarily glued to each other by a known type of adhesive such as double-sided tape.

The sound reproduction means may be a sound device, such as loudspeaker, or an alternative device for reproducing sound signal, such as one or two headphones in a headphone box. The headphone box can serve only to store the headphones, or it can also be their charger.

The intermediate connecting element can be used as accessory for peripherals, and be, for example, a mouse pad.

The electronic device charger may be a wireless electronic device charger, or a vertical stand for an electronic device with charging via a physical interface for charging or data transmission (e.g. via a USB port).

Preferably, the entire set of the product is wrapped with stretch film for complete protection during its transportation.

The system, according to the useful model, is more environmentally friendly and it minimizes the disposal of waste products in nature.

### DESCRIPTION OF THE ATTACHED FIGURES

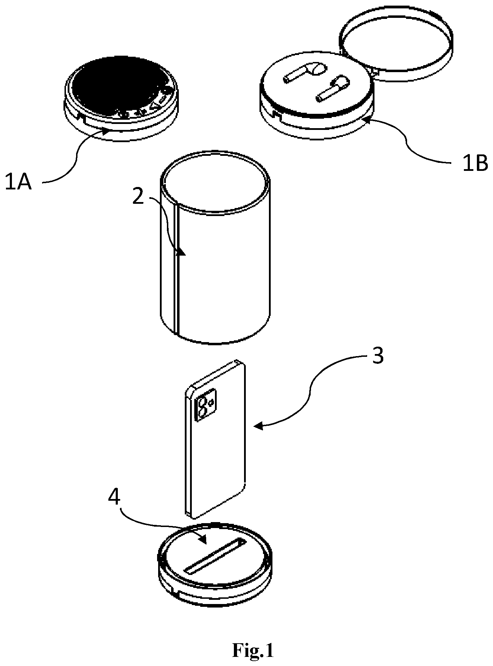

Fig. 1 is an exploded perspective view of the proposed electronic device packaging system built of usable components complementing the functionality, according to a preferred embodiment of the invention.

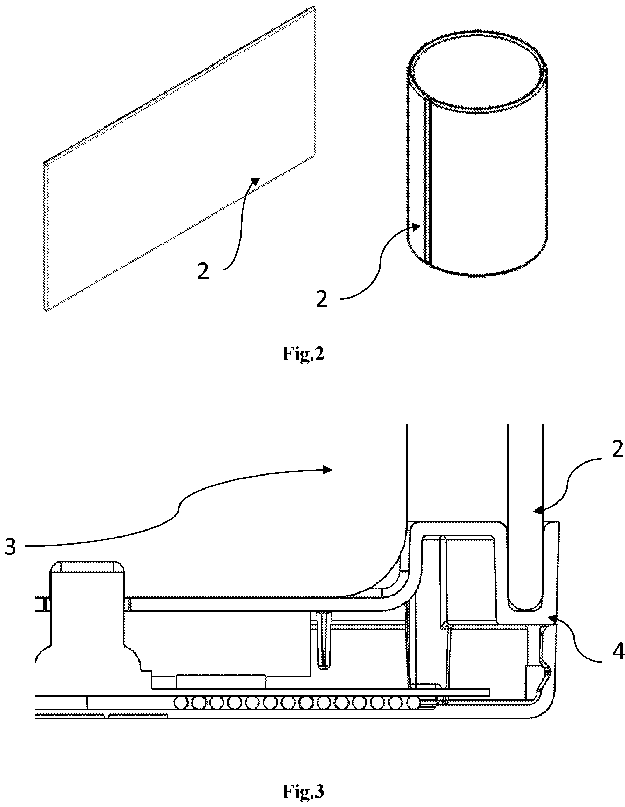

Fig. 2 is an isometric view of a pad for peripheral device, according to the invention, both in an unfolded and bent state.
Fig. 3 is a partial sectional view of the lower portion of the electronic device packaging system, according to the invention, showing the connection of the electronic device to the charging device.

### EXAMPLE OF EMBODIMENT AND OPERATION OF THE INVENTION

The exemplary embodiment of the electronic device packaging system built of usable components complementing the functionality, according to the invention, comprises:
- A sound reproduction means, which is loudspeaker 1A and/or headphones 1B, and which housing serves as the first connecting element from the packaging system to the electronic device 3 and the flat and flexible component 2. Accordingly, said housing can be a loudspeaker housing, a box for headphones, or both. In a preferred embodiment, the first connecting element is disc-shaped, but can also be of another shape, for example a cube, parallelepiped, pyramid or other, as long as it fits in shape with the other elements of the packaging system, and can be assembled with them;
- Charging device 4 of an electronic device 3, the housing of which is preferably shaped as a disk-shaped second connecting element of the packaging system for the electronic device 3 and the flat and flexible component 2;
- Flat and flexible component 2, a mouse pad, which serves as an intermediate connecting element of the packaging system for the electronic device 3. In bent position, the flat and flexible component 2 fulfills its function of "packaging", being in the form of a hollow cylinder, in which the electronic device 3 is placed. The connection between the first, the intermediate and the second connecting elements of the system can be made by grooves formed for the purpose on the bottom of the first connecting element and on the ceiling of the second connecting element, in which the intermediate connecting element is placed in a bent position. Alternatively, the elements may be temporarily glued to each other by a known type of adhesive such as double-sided tape. In unfolded position, the flat and flexible component 2 fulfills its working function of a pad for peripheral computer device, for example, mouse. Alternatively, it is possible for the flat and flexible component 2 to be, for example, an advertising panel.

In assembled state, all elements can be additionally wrapped in stretch film to preserve their wholeness during transportation.

The reference numbers of the technical features are included in the claims solely for the purpose of increasing the comprehensibility of the claims and, therefore, these reference numbers do not have any limiting effect on the interpretation of the elements indicated by these reference numbers.

## Claims

1. Packaging system for an electronic device built of usable components complementing the functionality of the device, said packaging system comprising a geometrically connected first connecting element (1A, 1B), comprising a sound reproduction means, connected to one side of an intermediate connecting element (2) which at its other side is connected to a second connecting element (4), which is housing a device for charging said electronic device (3), **characterised in that** the intermediate connecting element (2) is a flexible component that can be flat, which in a bent position is arranged around a space for accommodation of the electronic device and is secured to a bottom of the first connecting element (1A, 1B) and to a ceiling of the second connecting element (4).

2. Packaging system for electronic device according to claim 1, **characterized in that** the intermediate connecting element is placed in grooves formed on the bottom of the first connecting element and on the ceiling of the second connecting element.

3. Packaging system for electronic device according to any of the preceding claims, **characterized in that** the sound reproduction means is a loudspeaker (1A).

4. Packaging system for electronic device according to claims 1 and 2, **characterized in that** the sound reproduction means is at least one headphone (1B).

5. Packaging system for electronic device according to any of the preceding claims, **characterized in that** the intermediate connecting element (2) is a mouse pad.

## Patentansprüche

1. Verpackungssystem für ein elektronisches Gerät, das aus verwendbaren Komponenten besteht, die die Funktionalität des Geräts ergänzen, wobei das besagte Verpackungssystem ein geometrisch verbundenes erstes Verbindungselement (1A, 1B) umfasst, das ein Tonwiedergabemittel umfasst und mit einer Seite eines Zwischenverbindungselements (2) verbunden ist, das auf seiner anderen Seite mit einem zweiten Verbindungselement (4) verbunden ist, das eine Vorrichtung zum Laden des besagten elektronischen Geräts (3) beherbergt, **dadurch gekennzeichnet, dass** das Zwischenverbindungselement (2) eine flexible Komponente ist, die flach sein kann und die in gebogener Position um einen Raum zur Aufnahme des elektronischen Geräts herum angeordnet und an einer Unterseite des ersten Verbindungselements (1A, 1B) und an einer Decke des zweiten Verbindungselements (4) befestigt ist.

2. Verpackungssystem für ein elektronisches Gerät gemäß Anspruch 1, **dadurch gekennzeichnet, dass** das Zwischenverbindungselement in Nuten platziert ist, die an der Unterseite des ersten Verbindungselements und an der Decke des zweiten Verbindungselements geformt sind.

3. Verpackungssystem für ein elektronisches Gerät gemäß einem der vorhergehenden Ansprüche, **dadurch gekennzeichnet, dass** das Tonwiedergabemittel ein Lautsprecher (1A) ist.

4. Verpackungssystem für ein elektronisches Gerät gemäß den Ansprüchen 1 und 2, **dadurch gekennzeichnet, dass** das Tonwiedergabemittel mindestens ein Kopfhörer (1B) ist.

5. Verpackungssystem für ein elektronisches Gerät gemäß einem der vorhergehenden Ansprüche, **dadurch gekennzeichnet, dass** das Zwischenverbindungselement (2) ein Mauspad ist.

## Revendications

1. Système de conditionnement pour un dispositif électronique constitué de composants utilisables complétant la fonctionnalité du dispositif, ledit système de conditionnement comprenant un premier élément de connexion (1A, 1B) géométriquement connecté, comprenant un moyen de reproduction sonore, connecté à un côté d'un élément de connexion intermédiaire (2) qui, de son autre côté, est relié à un deuxième élément de connexion (4), qui loge un dispositif de chargement dudit appareil électronique (3), **caractérisé en ce que** l'élément de connexion intermédiaire (2) est un composant flexible pouvant être plat, qui en position pliée est disposé autour d'un espace de logement du dispositif électronique et est solidaire d'un fond du premier élément de connexion (1A, 1B) et à un plafond du deuxième élément de liaison (4).

2. Système de conditionnement pour un dispositif électronique selon la revendication 1, **caractérisé en ce que** l'élément de connexion intermédiaire est placé dans des rainures formées sur le fond du premier élément de connexion et sur le plafond du deuxième élément de connexion

3. Système de conditionnement pour un dispositif électronique selon l'une quelconque des revendications précédentes, **caractérisé en ce que** le moyen de restitution sonore est un haut-parleur (1A).

4. Système de conditionnement pour un dispositif électronique selon les revendications 1 et 2, **caractérisé en ce que** le moyen de restitution sonore est au moins un casque (1B).

5. Système de conditionnement pour un dispositif électronique selon l'une quelconque des revendications précédentes, **caractérisé en ce que** l'élément de connexion intermédiaire (2) est un tapis de souris.
